# DEMANDE DE BREVET EUROPEEN

(11) **EP 0 656 411 A1**
(43) Date de publication de la demande: **07.06.1995**
(21) Numéro de dépôt: 94420317.3
(22) Date de dépôt: 15.11.1994
(51) Int. Cl.: C09K 3/30, A01N 25/06

(54) **Composition pour aérosol et système générateur d'aérosol la contenant**

(30) Priorité: 29.11.1993 FR 9314483
(71) Demandeur: RHONE-POULENC AGROCHIMIE, 69009 Lyon (FR)
(72) Inventeur: Joannais, Pierre, F-69340 Francheville (FR); Rouanet, Anne-Claire, F-69530 Brignais (FR)

(57) **Abrégé**

Solutions liquides pour aérosol comprenant de l'éther méthylique du monopropylène glycol, et une huile d'origine pétrolière, et éventuellement une ou plusieurs matières actives en agriculture.

Système générateur d'aérosol comprenant une telle solution liquide et procédé de traitement des plantes correspondant.

## Description

La présente invention a pour objet une nouvelle composition pour aérosol, un système générateur d'aérosol contenant ladite composition ainsi qu'un procédé de traitement des plantes au moyen de cette même composition.

Le traitement des plantes de la maison ou du jardin au moyen d'aérosol est bien apprécié du jardinier amateur ou de l'horticulteur pour sa commodité. De tels traitements sont utilisés en particulier pour conférer à la surface du végétal un aspect lustrant ou brillant agréable au regard ; cette application pouvant être combinée avec celle destinée à détruire, de façon curative ou préventive, des parasites. Les parasites que l'on peut traiter sont des champignons phytopathogènes, des insectes nuisibles, des acariens ou des mauvaises herbes.

Dans le présent texte, on entend par aérosol une suspension de fines particules liquides ou solides dans un gaz ou mélange de gaz, et, par système générateur d'aérosol, un dispositif apte à produire une telle suspension. Un système générateur d'aérosol comprend généralement un boîtier, serti d'une valve équipée d'un tube plongeur, un liquide destiné à être pulvérisé et un gaz ou un mélange de gaz, propulseur dudit liquide.

L'aspect du dépôt résultant de la pulvérisation sur le végétal dépend de la composition liquide qui est utilisée et est un critère de choix particulièrement important pour l'utilisateur. Un écueil à éviter est ainsi la possibilité d'observer sur une feuille, juste après que celle-ci ait reçu l'aérosol, la présence de gouttes irrégulièrement distribuées sur sa surface, ce qui se traduit après le temps nécessaire à l'évaporation de la solution, par la présence de traces blanchâtres inesthétiques. Un autre écueil à éviter est au contraire la présence sur la feuille, juste après que celle-ci ait reçu l'aérosol, d'un film liquide trop épais, susceptible de couler et de se répandre dans le milieu environnant la plante traitée, tel que moquette ou tapis, lequel film confère à la feuille, après évaporation, un aspect exagérément vernissé, peu apprécié par l'amateur de plantes. Au contraire, l'aspect recherché pour la surface de la feuille juste après pulvérisation est la présence d'une fine couche liquide homogène donnant lieu après évaporation de la solution à un aspect lustrant ou brillant, agréable au regard, qualifié encore de satiné ou par le mot anglais de "polish".

Un but de la présente invention est de fournir une composition liquide pour aérosol permettant de donner à la plante un aspect lustrant ou brillant agréable au regard.

Un autre but de la présente invention est de fournir une composition liquide pour aérosol qui n'entraîne pas de phytotoxicité pour le végétal traité.

Un autre but de la présente invention est de fournir un système ou dispositif générateur d'aérosol n'entraînant pas de nuisances pour l'environnement.

Un autre but de la présente invention est de fournir un système générateur d'aérosol présentant pour l'utilisateur une sécurité d'emploi améliorée.

Un autre but de la présente invention est de fournir une composition pour aérosol permettant une utilisation prolongée.

Un autre but de la présente invention est d'assurer la pulvérisation de toute la solution active présente dans le récipient.

Un autre but de la présente invention est de fournir une composition liquide permettant un conditionnement amélioré de l'aérosol.

Un autre but de la présente invention est d'apporter sur la surface de la plante ou du végétal à traiter une matière active en agriculture, telle qu'un insecticide, un fongicide, un herbicide, un acaricide, un régulateur de croissance, un oligo élément ou un engrais.

Il a maintenant été trouvé que ces buts pouvaient être atteints en totalité ou en partie au moyen des compositions et systèmes ou dispositifs générateurs d'aérosol de l'invention.

Dans ce qui suit, les pourcentages utilisés sont des pourcentages en poids pour autant qu'il n'en est pas précisé autrement.

Les compositions pour aérosol de la présente invention sont des solutions liquides comprenant :
- de 35 à 90 % de l'éther méthylique du monopropylène glycol, de préférence 40 à 70 %,
- de 10 à 25 % d'une huile d'origine pétrolière, de préférence de 15 à 22 %.

Alors que les solvants sont connus pour être généralement agressifs à l'égard des plantes, de telles solutions n'entraînent pas, de façon tout à fait surprenante, de symptômes de phytotoxicité notables sur les végétaux traités, en raison de la nature particulière du mélange solvant utilisé.

L'huile d'origine pétrolière utilisable dans les compositions selon l'invention est une coupe ou un mélange de coupes pétrolières provenant de la distillation du pétrole brut et distillant entre 200 et 450 °C, de préférence entre 280 et 410 °C. Ladite huile est constituée d'un mélange composé de 50 à 80 % , de préférence 65 à 75 %, d'hydrocarbures paraffiniques, c'est à dire d'hydrocarbures saturés, linéaires ou ramifiés, et de 20 à 50 %, de préférence 25 à 35 %, d'hydrocarbures naphténiques, encore appelés hydrocarbures alicycliques ou hydrocycliques. On choisira avantageusement une huile d'origine pétrolière possédant les caractéristiques énoncées précédemment et possédant en outre une viscosité à la température de 25°C comprise dans un domaine de 25 à 45 milliPascal.seconde, de préférence de 30 à 40 milliPascal.seconde.

Selon un aspect préféré de l'invention, les solutions liquides pour aérosol de la présente invention comprennent également de 1 à 40 % d'un solvant isoparaffinique, de préférence de 2 à 35%. On entend par solvant isoparaffinique une coupe ou mélange de coupes prétrolières provenant de la distillation du pétrole brut et possédant les 3 caractéristiques suivantes :
- il distille entre 130 et 280 °C, de préférence entre 180 et 205 °C,
- il posséde une viscosité de 1 à 3 milliPascal.seconde, de préférence 1,2 à 1,8 milliPascal.seconde,
- il est constitué d'au moins 99,5 % en volume d'hydrocarbures saturés à chaîne ramifiée.

Selon un autre aspect préféré de l'invention, les solutions liquides pour aérosol de la présente invention comprennent également de 0,005 à 4 % d'une ou plusieurs matières actives en agriculture, de préférence de 0,005 à 0,3 %.

Selon un aspect avantageux de l'invention, la ou les matières actives en agriculture sont choisies dans le groupe comprenant les insecticides, herbicides, fongicides ou acaricides.

On choisira avantageusement la ou les matières actives dans le groupe comprenant : bifenthrine, propiconazole, myclobutanil, tétramethrine, cypermethrine, dicofol, dinocap, dichlone, roténone.

Une composition particulièrement préférée selon l'invention inclut comme matière active en agriculture la roténone.

En raison de la faible concentration en matières actives des compositions selon l'invention, il est bien entendu que la liste des matières actives en agriculture préférées données ci-dessus n'est en aucune manière limitative de l'invention: toute matière active en agriculture ayant une solubilité à température ambiante supérieure à ces valeurs est donc avantageusement comprise dans l'invention.

Selon un autre aspect de l'invention, les solutions liquides pour aérosol lorsqu'elles sont maintenues, au moyen du dispositif décrit ci-après, à une température de 20 °C et sous une pression de 6 bars, comprennent de 0,01 à 4 % de dioxyde de carbone à l'état dissous, de préférence de 0,05 à 3 % .

Enfin les compositions selon l'invention peuvent également contenir d'autres additifs connus en soi et utilisés pour la formulation des aérosols, tels que : agent anti-corrosion, colorant, substance odorante.

Les compositions selon l'invention sont préparées par simple mélange des composants, à température ambiante.

L'invention a également pour objet un système générateur d'aérosol comprenant :
- une solution liquide telle que décrite précédemment,
- un boîtier, qui est serti d'une valve équipée d'un tube plongeur,
- un gaz, ou mélange de gaz, propulseur de ladite solution liquide et maintenant à l'intérieur du boîtier une pression comprise entre 1 et 7 bars, de préférence entre 2 et 6 bars.

Selon un mode de réalisation préféré, le gaz ou mélange de gaz propulseur du système générateur d'aérosol selon l'invention est choisi parmi le dioxyde de carbone ou l'azote ou l'air. L'emploi de tels gaz ou mélanges de gaz comme gaz propulseur est particulièrement avantageux en ce qu'il évite l'utilisation des hydrocarbures halogénés, tels que les chlorofluorocarbures (ou CFC ) et les hydrochlorofluorocarbures (ou HCFC), ou l'emploi des hydrocarbures saturés, comme le propane ou le butane. En effet, les hydrocarbures halogénés, en raison de leur interaction avec la biosphère, notamment la couche d'ozone ont été soumis pour certains d'entre eux à une interdiction et pour d'autres à des restrictions d'emploi conduisant à une disparition possible dans les prochaines années. Les hydrocarbures saturés entraînent quant à eux, en raison de leurs caractéristiques de combustibilité et d'explosivité, des problèmes de sécurité d'emploi. Les systèmes générateurs d'aérosol comprenant du dioxyde de carbone ou de l'azote comme gaz propulseur, offrent par conséquent une sécurité améliorée tant au niveau écologique que pour le consommateur.

Selon une variante encore plus préférentielle de l'invention, le gaz propulseur est le dioxyde de carbone. Dans ce cas en effet les compositions selon l'invention permettent d'améliorer la solubilité du gaz propulseur. Cette propriété est avantageuse car le gaz dissous permet par désorption de compenser la diminution de pression dans le boîtier qui résulte de l'utilisation du système générateur d'aérosol. Elle assure ainsi un fonctionnement prolongé et régulier durant toute la période d'utilisation et assure la vidange totale du récipient. Elle est également avantageuse pour le fabricant car elle facilite le conditionnement industriel du boîtier, en améliorant les cadences de production.

La quantité de solution liquide contenue dans le boîtier du système générateur d'aérosol selon l'invention est égale à 55 à 80 % en volume, de préférence de 60 à 75 % en volume.

Les systèmes générateurs d'aérosol selon l'invention sont obtenus en remplissant un boîtier d'une composition selon l'invention d'après des techniques connues en soi de l'homme du métier.

L'invention a également pour objet un procédé de traitement des plantes caractérisé en ce que on pulvérise de 300 à 700 l/ha, de préférence de 450 à 550 l/ha d'une composition selon l'invention, au moyen d'un système générateur d'aérosol tel que décrit précédemment.

Les compositions et systèmes générateurs d'aérosol selon l'invention sont illustrés dans les exemples suivants qui sont donnés à titre non limitatif.

Dans ces exemples, l'aspect lustrant conféré par les compositions selon l'invention sur le végétal a été évalué en les pulvérisant sur un Ficus benjamina à une distance de l'ordre de 30 cm, au moyen d'un système générateur d'aérosol également selon l'invention. L'aspect des feuilles de la plante après pulvérisation a été quantifié par un système de notation allant de 0 à 10. La note 0 est donnée dans les cas suivants :
- aspect semblable à celui d'une plante non traitée qui présente des dépôts de poussières ou des tâches blanchâtres dues, notamment, au calcaire apporté par l'eau d'arrosage,
- présence de coulure c'est-à-dire d'un écoulement ou ruissellement de la solution liquide dès que la pulvérisation a mise en contact celle-ci avec la surface végétale. Une note de 10 est attribuée dans le cas d'une plante traitée qui ne présente pas de traces de poussières ou de tâches blanchâtres et offre en toutes parties de sa surface foliaire un aspect satiné. Une note de 5 est donnée à une plante traitée dont les feuilles ne présentent pas de traces blanchâtres dues au calcaire , mais qui ne présentent un aspect satiné que pour 50 % de leur surface. Une note comprise entre 5 et 10 indique que l'on a observé les mêmes symptômes, l'aspect satiné variant simplement de 50 à 100 % de la surface foliaire. La note finale est obtenue en faisant la moyenne des notes relevées sur 4 essais menés dans des conditions identiques sur 4 Ficus benjamina différents. On estime qu'une note au moins égale à 5 est acceptable.

Par ailleurs, la phytotoxicité est évaluée de la façon suivante. Des plants de haricots au stade 2 feuilles (10 jours après semis) sont traités en serre en pulvérisant pendant 5 secondes une composition selon l'invention, au moyen d'un système générateur d'aérosol tel que décrit précédemment. Ce traitement est répété sur 3 autres plants de haricots semblables. La note attribuée, de 0 à 10, est effectuée 7 jours après le traitement par rapport à un plant de haricot témoin, non traité et correspond à une moyenne des 4 répétitions effectuées. Une note de 0 signifie que les haricots traités ont un aspect en tout point identique à celui de haricots qui n'ont reçu aucun traitement. Une note de 10 signifie que les feuilles des haricots traités ont perdu totalement leur coloration verte, en offrant un aspect qui peut être notamment marron, ou jaune, ou sec, ou raccorni. Une note comprise entre 5 et 10 indique que ces symptômes, dits de phytotoxicité, ne sont observés que sur une fraction de la surface foliaire qui varie, respectivement entre 50 et 100 %. On préfère que la note soit au plus égale à 0,5, ce qui correspond à des symptômes de phytotoxicité qui n'apparaissent que sur moins de 1% de la surface foliaire.

Par ailleurs, on a déterminé le poids de CO₂ dissous dans la composition sous une pression de 6 bars et à une température de 20 °C de la façon suivante. On remplit à 75 % en volume de composition liquide un boîtier d'aérosol. On sertit le boîtier d'une valve équipée d'un tube plongeur. Après tarage initial du boîtier, on introduit par barbotages successifs et agitation, des quantités de CO₂ sous pression constante égale à 6 bars, jusqu'à ce que le poids du boîtier soit constant, ce qui correspond à la saturation de la solution en CO₂. Le poids de CO₂ dissous dans la composition liquide est égal au poids de CO₂ ainsi introduit, calculé par différence entre le poids final et le poids initial du boîtier, le poids de CO₂ en phase gazeuse étant négligeable.

Enfin, l'huile d'origine pétrolière et le solvant isoparaffinique utilisés dans tous les exemples possèdent les caractérisitiques suivantes. L'huile d'origine pétrolière :
- distille entre 280°C et 410 °C,
- est constituée de 66% d'hydrocarbures paraffiniques et de 30 % d'hydrocarbures naphténiques,
- possède une viscosité de 36 milliPascal.seconde, mesurée à 25 °C.

Le solvant isoparaffinique :
- distille entre 188 et 204 °C,
- a une viscosité, mesurée à 25 °C, de 1,53 milliPascal.seconde
- a une teneur en hydrocarbures saturés à chaîne ramifiée de 99,9 % en volume.

### Exemple 1 :

On prépare par simple mélange une composition contenant les quantités suivantes, exprimées en pourcentage en poids, des composants :

| | |
|---|---|
| éther méthylique du monopropylène glycol : | 80 % |
| huile d'origine pétrolière : | 20 % |

On prépare un système générateur d'aérosol de la façon suivante. Dans un boîtier en fer blanc de 210 ml de volume utile, on introduit 157 ml de la composition précédemment préparée, correspondant à un poids de 125 g. On introduit une valve à bille, qui permet de pulvériser la composition quelle que soit l'orientation du boitier, et qui est équipée d'un tube plongeur en polyéthylène, ladite valve ayant pour orifice de gicleur un diamètre de 0,25 mm. On procéde à la fermeture hermétique du boîtier au moyen d'une tête de sertissage. On pèse l'ensemble et on mesure un poids de 170,6 g. On introduit en 3 fois une quantité de dioxyde de carbone égale à 4,27 g, mesuré par pesée de l'ensemble du système de conteneurisation sous une pression de 6 bar, au moyen d'une valve femelle s'adaptant à la valve à bille précédemment décrite. On adapte sur le gicleur un bouton poussoir muni d'une buse de pulvérisation de 0,33 mm. La teneur en CO₂ dissous dans la composition liquide est de 3,4 %.

Ce système générateur d'aérosol est appliqué comme indiqué plus haut pour évaluer la phytotoxicité et l'aspect lustrant.

La phytotoxicité est de 0.

La note correspondant à l'aspect lustrant est de 8.

### Exemple 2 :

On reproduit la composition de l'exemple 1 en utilisant les constituants suivants :

| | |
|---|---|
| éther méthylique du monopropylène glycol : | 89,5 % |
| huile d'origine pétrolière : | 10,5 % |

On prépare un systéme générateur d'aérosol en procédant également comme à l'exemple 1.

La teneur en CO₂ dissous est égale à 3,6 %.

On mesure une phytotoxicité de 0 et une note correspondant à l'effet lustrant de 7.

### Exemple 3 :

On prépare de même un mélange des composants dans les proportions suivantes :

| | |
|---|---|
| éther méthylique du monopropylène glycol : | 50 % |
| solvant isoparaffinique : | 30 % |
| huile d'origine pétrolière : | 20 % |

Le système générateur d'aérosol est préparé comme décrit dans l'exemple 1. On mesure un poids de CO₂ dissous égal à 3,3 %. On mesure une phytotoxicité de 0 et une note correspondant à l'effet lustrant de 9.

### Exemple 4 :

On prépare un mélange des composants suivants, dans les proportions indiquées :

| | |
|---|---|
| éther méthylique du monopropylène glycol : | 50 % |
| solvant isoparaffinique : | 29,9 % |
| huile d'origine pétrolière : | 20 % |
| roténone : | 0,1 % |

Le système générateur d'aérosol est préparé comme décrit dans l'exemple 1.

On obtient pour la phytotoxicité, l'aspect lustrant et la teneur en CO₂ dissous des résultats identiques à ceux décrits dans l'exemple 3.

L'efficacité biologique de la composition est évaluée de la façon suivante.

On utilise une plante d'appartement appelée Schefflera, que l'on a préalablement infestée de 100 cochenilles (pulvinaria floccifera westw.) et sur laquelle on pulvérise à 30 cm pendant 5 secondes la composition ci-dessus de manière à traiter la face inférieure et supérieure des feuilles de ladite plante. Le relevé s'effectue à 7 et 14 jours après le traitement, en comptant le nombre de cochenilles mortes, rapporté au nombre initial .

Les résultats, exprimés en pourcentage, sont rassemblés dans le tableau ci-dessous en comparaison avec une plante infestée du même nombre de cochenilles et non traitée (appelée témoin). Ils correspondent à la moyenne de 4 essais menés en parallèle :

| | Résultats à 7 jours | Résultats à 14 jours |
|---|---|---|
| Plante témoin | 0 | 0 |
| Plante traitée | 95 | 100 |

### Exemple 5 :

On prépare un mélange des composants suivants, dans les proportions indiquées :

| | |
|---|---|
| éther méthylique du monopropylène glycol : | 50 % |
| solvant isoparaffinique : | 29,8 % |
| huile d'origine pétrolière : | 20 % |
| tétraméthrine : | 0,2 % |

Le système générateur d'aérosol est préparé comme décrit dans l'exemple 1.

On obtient des résultats de phytotoxicité, d'aspect lustrant et de teneur en CO₂ dissous identiques à ceux décrits dans l'exemple 3.

### Exemple 6 :

On prépare un mélange des composants suivants, dans les proportions indiquées :

| | |
|---|---|
| éther méthylique du monopropylène glycol : | 50 % |
| solvant isoparaffinique : | 29,7 % |
| huile d'origine pétrolière : | 20 % |
| cyperméthrine : | 0,3 % |

Le système générateur d'aérosol est préparé comme décrit dans l'exemple 1.

On obtient des résultats de phytotoxicité, d'aspect lustrant et de teneur en CO₂ dissous identiques à ceux décrits dans l'exemple 3.

L'activité biologique est évaluée de la façon suivante :

On place 5 fourmis dans un bac dont les parois intérieures sont revêtues de téflon, pour éviter qu'elles ne s'enfuient. On pulvérise pendant 1 seconde à 30 cm du bac la composition ci-dessus et l'on mesure le temps qui s'écoule entre la fin de la pulvérisation et la mort de la totalité des fourmis.

On mesure un temps de 20 secondes.

### Exemple 7 :

On prépare un mélange des composants suivants, dans les proportions indiquées :

| | |
|---|---|
| éther méthylique du monopropylène glycol : | 50 % |
| solvant isoparaffinique : | 29,8 % |
| huile d'origine pétrolière : | 20 % |
| bifenthrine : | 0,1 % |
| propiconazole : | 0,1 % |

Le système générateur d'aérosol est préparé comme décrit dans l'exemple 1.

On obtient des résultats de phytotoxicité, d'aspect lustrant et de teneur en CO₂ dissous identiques à ceux décrits dans l'exemple 3.

L'activité biologique de cette composition sur pucerons est évaluée de la façon suivante.

On utilise un rosier (meillandina) infesté d'un nombre connu de pucerons, sur lequel on pulvérise à 30 cm, par pressions successives de 1 seconde, de manière à traiter l'ensemble du plant, la composition à tester.

Le contrôle est effectué après 4 et 7 jours par dénombrement des pucerons vivants . Les résultats d'efficacité sont exprimés (en pourcentage) en rapportant le nombre de pucerons morts au nombre de pucerons initial. Ces résultats correspondent à la moyenne de 4 essais répétés dans les mêmes conditions avec 4 plants de rosiers différents.En comparaison, on a indiqué les résultats observés pour un plant de rosier meillandina infesté également d'un nombre connu de pucerons et non traité.

| | Nombre de pucerons initial | Résultats après 4 jours | Résultats après 7 jours |
|---|---|---|---|
| plante témoin | 112 | 0 | 0 |
| plante traitée | 132 | 100 | 100 |

On évalue de façon analogue l'activité biologique de cette composition sur araignées rouges (Tetramychus urticae). Les résultats sont rassemblés dans le tableau ci-dessous :

| | Nombre d'araignées initial | Résultats après 7 jours | Résultats après 14 jours |
|---|---|---|---|
| plante témoin | 500 | 0 | 0 |
| plante traitée | 500 | 98 | 100 |

On évalue de façon analogue l'activité biologique de cette composition sur chenilles défoliatrices (Mamestra brassicae L.) en utilisant du choux (variété Milan d'Aubervilliers). Les résultats sont rassemblés dans le tableau ci-dessous :

| | Nombre de chenilles initial | Résultats après 2 jours | Résultats après 4 jours |
|---|---|---|---|
| plante témoin | 12 | 0 | 0 |
| plante traitée | 12 | 99 | 100 |

### Exemple 8 :

On prépare un mélange des composants suivants, dans les proportions indiquées :

| | |
|---|---|
| éther méthylique du monopropylène glycol : | 50 % |
| solvant isoparaffinique : | 29,6 % |
| huile d'origine pétrolière : | 20 % |
| cyperméthrine : | 0,1 % |
| dicofol : | 0,1 % |
| dichlone : | 0,1 % |
| dinocap : | 0,1 % |

Le système générateur d'aérosol est préparé comme décrit dans l'exemple 1.

On obtient des résultats de phytotoxicité, d'aspect lustrant et de teneur en CO₂ dissous identiques à ceux décrits dans l'exemple 3.

L'activité biologique de cette composition est testée sur pucerons, araignées rouges et chenilles défoliatrices dans des conditions analogues à celles de l'exemple 7. On obtient des résultats identiques .

### Exemple 9 :

On prépare un mélange des composants suivants, dans les proportions indiquées :

| | |
|---|---|
| éther méthylique du monopropylène glycol : | 50 % |
| solvant isoparaffinique : | 29,8 % |
| huile d'origine pétrolière : | 20 % |
| bifenthrine : | 0,1 % |
| myclobutanil : | 0,1 % |

Le système générateur d'aérosol est préparé comme décrit dans l'exemple 1.

On obtient des résultats de phytotoxicité et d'aspect lustrant identiques à ceux décrits dans l'exemple 3.

L'activité biologique de cette composition est testée sur pucerons, araignées rouges et chenilles défoliatrices dans des conditions analogues à celles de l'exemple 7. On obtient des résultats identiques .

### Exemple 10 :

On prépare un mélange identique à celui de l'exemple 3, et on conditionne un système générateur d'aérosol avec de l'azote, avec un taux de remplissage du boîtier de 60 % en volume.

La note de phytotoxicité est de 0 et la note relative à l'aspect lustrant est de 6.

### Exemple 11 :

On prépare un mélange identique à celui de l'exemple 4, et l'on conditionne le système générateur d'aérosol avec de l'azote comme décrit à l'exemple 10.

On obtient des résultats de phytotoxicité et d'aspect lustrant identiques à ceux de l'exemple 10. Les résultats d'activité biologique sont identiques à ceux de l'exemple 4.

### Exemple 12 :

On prépare un mélange identique à celui de l'exemple 5, et l'on conditionne le système générateur d'aérosol avec de l'azote comme décrit à l'exemple 10.

On obtient des résultats de phytotoxicité et d'aspect lustrant identiques à ceux de l'exemple 10.

### Exemple 13 :

On prépare un mélange identique à celui de l'exemple 8, et l'on conditionne le système générateur d'aérosol avec de l'azote comme décrit à l'exemple 10.

On obtient les mêmes résultats que dans l'exemple 10, pour la phytotoxicité et l'aspect lustrant et les mêmes résultats que dans l'exemple 8 pour l'activité biologique.

## Revendications

1. Solution liquide pour aérosol comprenant :
- de 35 à 90 % de l'éther méthylique du monopropylène glycol, de préférence 40 à 70 %,
- de 10 à 25 % d'une huile d'origine pétrolière, de préférence de 15 à 22 %.

2. Solution liquide pour aérosol selon la revendication 1 comprenant de 1 à 40 % d'un solvant isoparaffinique, de préférence de 2 à 35%.

3. Solution liquide pour aérosol selon l'une des revendications 1 ou 2 comprenant de 0,005 à 4 % d'une ou plusieurs matières actives en agriculture, de préférence de 0,005 à 0,3 %.

4. Solution liquide pour aérosol selon la revendication 3 caractérisée en ce que la ou les matières actives en agriculture sont choisies dans le groupe comprenant les insecticides, herbicides, fongicides ou acaricides.

5. Solution liquide pour aérosol selon l'une des revendications 3 ou 4 caractérisée en ce que la ou les matières actives en agriculture sont choisies dans le groupe comprenant : bifenthrine, propiconazole, myclobutanil, tétramethrine, cypermethrine, dicofol, dinocap, dichlone, roténone.

6. Solution liquide pour aérosol selon l'une des revendications 3 à 5 caractérisée en ce que la matière active en agriculture est la roténone.

7. Solution liquide pour aérosol selon l'une des revendications 1 à 6 comprenant de 0,01 à 4 % de dioxyde de carbone à l'état dissous, de préférence de 0,05 à 3 %.

8. Solution liquide pour aérosol selon l'une des revendications 1 à 7 caractérisée en ce qu'elle a un effet lustrant sur les plantes.

9. Système générateur d'aérosol comprenant :
- une solution liquide selon l'une des revendications 1 à 8,
- un boîtier, serti d'une valve équipée d'un tube plongeur,
- un gaz, ou mélange de gaz, propulseur de ladite solution liquide et maintenant à l'intérieur du boîtier une pression comprise entre 1 et 7 bars, de préférence entre 2 et 6 bars.

10. Système générateur d'aérosol selon la revendication 9 caractérisé en ce que le gaz ou mélange de gaz est choisi parmi le dioxyde de carbone ou l'azote ou l'air.

11. Système générateur d'aérosol selon l'une des revendications 9 ou 10 caractérisé en ce que le gaz est le dioxyde de carbone.

12. Système générateur d'aérosol selon l'une des revendications 9 à 11 caractérisé en ce que la quantité de solution liquide contenue dans le boîtier est égale à 55 à 80 % en volume, de préférence de 60 à 75 % en volume.

13. Procédé de traitement des plantes caractérisé en ce que on pulvérise de 300 à 700 l/ha, de préférence de 450 à 550 l/ha d'une composition selon l'une des revendications 1 à 8 , au moyen d'un système générateur d'aérosol selon l'une des revendications 9 à 12.
